# EUROPEAN PATENT APPLICATION

(11) **EP 3 859 302 A1**
(43) Date of publication of application: **04.08.2021**
(21) Application number: 18935187.7
(22) Date of filing: 27.09.2018
(51) Int. Cl.: G01N 3/08

(54) **MATERIAL TESTING MACHINE**

(71) Applicant: SHIMADZU CORPORATION, Kyoto-shi, Kyoto 604-8511 (JP)
(72) Inventor: MURAKAMI, Takashi, Kyoto-shi, Kyoto 604-8511 (JP); KAKIO, Naoshi, Kyoto-shi, Kyoto 604-8511 (JP)
(74) Representative: Becker, Eberhard
(86) International application number: PCT/JP2018/035893
(87) International publication number: WO 2020/065815

(57) **Abstract**

In this invention, a displacement gauge (40) comprises a first camera (41) that has a telecentric lens and photographs a test piece (11) and a second camera (42) that has a wide-angle lens and photographs the test piece (11) with a wider field of view than the photographic field of view of the first camera (41). The first camera (41) and second camera (42) are video cameras having imaging elements and transmit images acquired through photography at a prescribed frame rate (fps) to a personal computer (33). During photography by the first camera (41) and second camera (42), the test piece (11) is illuminated using a light (43).

## Description

### BACKGROUND

### [Technical Field]

The present invention relates to a material testing machine including a non-contact displacement gauge.

### [Background Art]

In a tensile test, a tensile force is applied to a test piece of which both ends are gripped by upper and lower grippers. Additionally, elongation of the test piece at this time is measured by, for example, a contact displacement gauge using a strain gauge, or a non-contact displacement gauge in which an image photographed by a camera is processed and a displacement of a distance between reference points is calculated. Since the non-contact displacement gauge can perform measurement even when the test piece breaks, it is used in a tensile test in which a tensile force is applied to the test piece until the test piece breaks.

When the elongation which is an amount of displacement in a direction in which the force is applied to the test piece is measured with the non-contact displacement gauge, two stickers with reference line marks are attached to a surface of the test piece at a predetermined interval. Then, a distance between reference lines is measured based on positions of a pair of reference line marks in an image photographed by a camera, and the elongation is measured from an amount of change in this distance.

When a displacement of a width which is an amount of displacement of the test piece in a direction orthogonal to the direction in which the force is applied to the test piece is measured with the non-contact displacement gauge, a distance between both end edges of the test piece is measured based on position information of both end edges of the test piece in the image photographed by the camera, and an amount of displacement of the width is measured from an amount of change in this distance (refer to Patent Literatures 1 and 2). When a flat plate-shaped test piece is used as a sample, in order to recognize a position of the test piece in a width direction, two stickers with reference line marks may be attached at a predetermined interval in the direction orthogonal to the direction in which the force is applied, and the amount of displacement of the width of the test piece may be measured using the reference line marks.

### [Citation List]

### [Patent Literature]

[Patent Literature 1]
   Japanese Patent Laid-Open No. 2011-169727
[Patent Literature 2]
   Japanese Patent Laid-Open No. 2012-088208

### SUMMARY

### [Technical Problem]

In a conventional material testing machine, when the elongation and width of a test piece are measured, the test piece is photographed by the same camera. When measurement of the elongation until the test piece breaks is attempted with a camera using a standard lens with a conventional angle of view, a camera position and the like are set so that a photographic field of view of the camera becomes large. When the photographic field of view of the camera is increased in this way, a size of the reference line mark on the test piece on the image becomes relatively small with respect to a screen, a displacement resolution is lowered, and physical property values which require minute displacement measurement results such as an elastic modulus and a Poisson's ratio (transverse strain/longitudinal strain) cannot be obtained. On the other hand, when a field of view enlargement ratio is increased, the elongation cannot be measured until the test piece breaks.

In addition, an imaging surface of the test piece may move forward and backward with respect to the camera during the test due to a state of a fixing jig such as a gripper which grips the test piece or warp of the test piece. When the test piece is photographed with a camera using a standard lens, and the test piece moves in a direction of an optical axis of the lens, a phenomenon in which a distance between the upper and lower reference line marks or an external size of the test piece changes occurs in the image photographed by the camera. Such an error becomes an error factor of the physical property values such as an elastic modulus and a Poisson's ratio obtained by calculation.

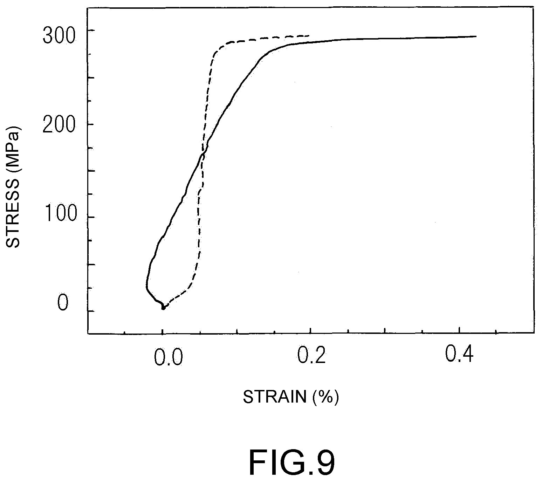

FIG. 9 is a stress-strain diagram drawn based on the measurement results of the displacement with a non-contact displacement gauge using a conventional standard lens when a tensile test is performed on the test piece. A vertical axis of the graph is stress, and a horizontal axis is strain. Additionally, a relationship between stress and longitudinal strain is shown by a solid line, and a relationship between stress and transverse strain is shown by a broken line. This stress-strain diagram is obtained by a tensile test on a stainless steel plate-shaped test piece, and shows a data region required for evaluation such as a yield point beyond an elastic region in which the stress increases linearly with respect to the strain.

In the tensile test of this type of material, since the test piece shows elastic strain in a low strain region in which the strain is about 0 to 0.2%, a diagram in which the stress increases linearly with respect to the strain is drawn. However, in displacement data acquired by the non-contact displacement gauge using the conventional standard lens, as the strain region becomes more minute, an influence of the measurement error caused by the movement of the test piece in the direction of the optical axis of the lens increases. In the diagram of FIG. 9, in the data region defined as the elastic region, both the longitudinal strain and the lateral strain show inflection points and do not show straight lines. With such a stress-strain diagram, an elastic modulus and a Poisson's ratio cannot be calculated accurately.

As a method for solving such a problem, three-dimensional measurement using stereo photography using a pair of cameras disposed in parallel can be considered. That is, the measurement accuracy of the elongation and the displacement of the width is improved by acquiring parallax images for reproducing a three-dimensional image and performing a three-dimensional correction for the movement of the test piece in the direction of the optical axis of the lens. However, in order to satisfy the accuracy required for the measurement of the minute displacement using such a method, a field of view magnification ratio of two cameras having the same specifications is increased, and a narrow range is observed. Then, since it becomes impossible to measure the displacement of the test piece after it is elongated beyond a certain length until it breaks, there arises a problem that test data for evaluating a tensile strength cannot be obtained.

The present invention has been made to solve the above problems, and it is desired to provide a material testing machine with a non-contact displacement gauge having improved measurement accuracy of small displacement.

### [Solution to Problem]

According to the invention described in claim 1, there is provided a material testing machine including a non-contact displacement gauge which measures an amount of displacement of a test body to which a force is applied, a force detector which measures the force applied to the test body, and a control device which is connected to the force detector and the non-contact displacement gauge, wherein the non-contact displacement gauge includes a first camera which has a telecentric lens and photographs the test body, and a second camera which has a wide-angle lens and photographs the test body with a field of view wider than a photographic field of view of the first camera, and the control device includes a displacement calculation unit which calculates the amount of displacement of the test body by performing image processing on an image photographed by the first camera and an image photographed by the second camera, and an analysis unit which analyzes material characteristics based on the amount of displacement of the test body calculated by the displacement calculation unit.

According to the invention described in claim 2, in the material testing machine described in claim 1, the analysis unit may create a first stress-strain diagram based on the amount of displacement of the test body calculated by image-processing the image photographed by the first camera and the force measured by the force detector, may create a second stress-strain diagram based on the amount of displacement of the test body calculated by image-processing the image photographed by the second camera and the force measured by the force detector, and may create a synthetic stress-strain diagram obtained by synthesizing the first stress-strain diagram and the second stress-strain diagram.

According to the invention described in claim 3, in the material testing machine described in claim 2, the analysis unit may create the synthetic stress-strain diagram using data of the first stress-strain diagram in a portion until the amount of displacement of the test body reaches a predetermined amount of displacement after start of a test and using data of the second stress-strain diagram in a portion in which the amount of displacement of the test body exceeds the predetermined amount of displacement.

### [Advantageous Effects of Invention]

According to the invention described in claims 1 to 3, because a non-contact displacement gauge which photographs a test body with a first camera having a telecentric lens and a second camera having a wide-angle lens is provided, a small displacement required to calculate an elastic modulus and a Poisson's ratio can be calculated with high accuracy from an image acquired by the first camera, and a large displacement until a test piece that is the test body breaks in a tensile test can be calculated from an image acquired by the second camera. In this way, since the non-contact displacement gauge of the present invention can measure both the small displacement and the large displacement, it is possible to support tests of more types of materials, and it is possible to obtain a plurality of highly reliable physical property values from results of a single test.

### BRIEF DESCRIPTION OF THE DRAWINGS

FIG. 1 is a schematic view of a material testing machine according to the present invention.
FIG. 2 is a block diagram showing a main control system of the material testing machine.
FIG. 3 is a schematic view of a plate-shaped test piece.
FIG. 4 is a stress-strain diagram obtained by performing a tensile test on the test piece.
FIG. 5 is a stress-strain diagram obtained by performing the tensile test on the test piece.
FIG. 6 is a schematic view of a round bar-shaped test piece.
FIG. 7 is a stress-longitudinal strain curve obtained by performing a tensile test on the test piece.
FIG. 8 is a stress-transverse strain diagram obtained by performing the tensile test on the test piece.
FIG. 9 is a stress-strain diagram drawn based on measurement results of displacement with a non-contact displacement gauge using a conventional standard lens when a tensile test is performed on a test piece.

### DESCRIPTION OF THE EMBODIMENTS

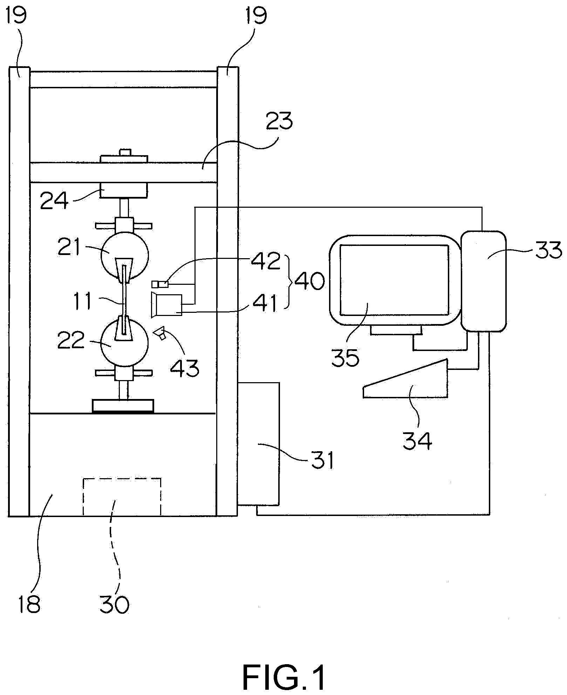

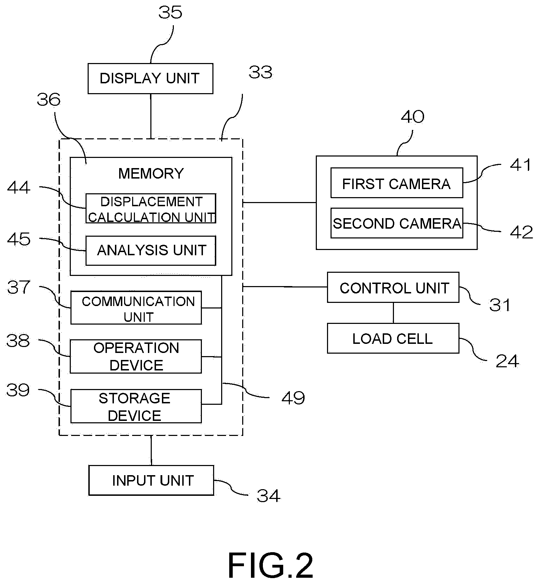

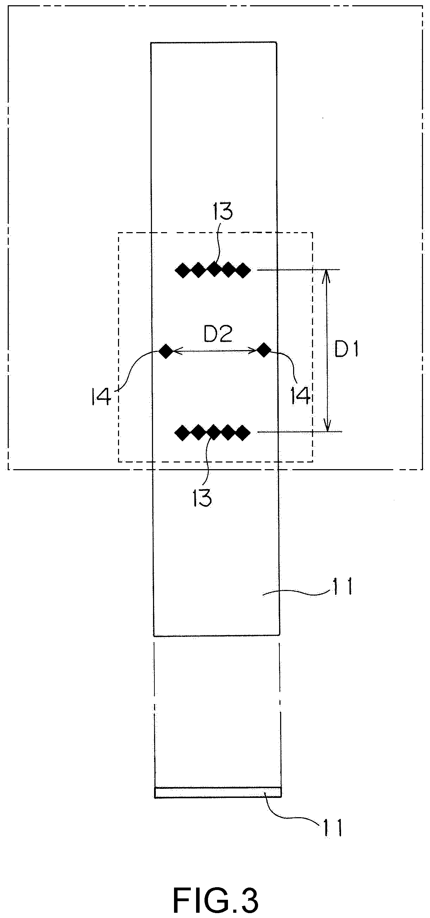

Hereinafter, embodiments of the present invention will be described with reference to the drawings. FIG. 1 is a schematic view of a material testing machine according to the present invention. FIG. 2 is a block diagram showing a main control system of the material testing machine. FIG. 3 is a schematic view of a plate-shaped test piece 11.

The material testing machine includes a table 18, a pair of screw rods which are disposed in a pair of covers 19 standing on the table 18, a crosshead 23 which is movable along the screw rods, an upper gripper 21 which is connected to the crosshead 23 via a load cell 24, a lower gripper 22 which is connected to the table 18, and a load mechanism 30 which moves the crosshead 23 up and down.

Nuts screwed with the pair of screw rods are arranged and disposed at both end portions of the crosshead 23. The pair of screw rods are connected to the load mechanism 30 via a power transmission mechanism, and rotate in synchronization with drive of the load mechanism 30. The crosshead 23 is moved up and down by the rotation of the pair of screw rods, and a force is applied to the test piece 11 of which both ends are gripped by the upper gripper 21 and the lower gripper 22. The force at this time is measured by the load cell 24. Further, the displacement of the test piece 11 at that time is measured by a displacement gauge 40. As described above, a testing machine main body of the material testing machine has specifications for a tensile test in which a test body is a test piece 11 as shown in FIG. 3.

The displacement gauge 40 includes a first camera 41 which has a telecentric lens and photographs the test piece 11, and a second camera 42 which has a wide-angle lens and photographs the test piece 11 in a wider field of view than a photographic field of view of the first camera 41. The first camera 41 and the second camera 42 are video cameras having imaging elements, and images acquired by photography at a predetermined frame rate (fps) are transmitted to a personal computer 33. During photography by the first camera 41 and the second camera 42, the test piece 11 is illuminated by a light 43.

The material testing machine includes a control unit 31 which controls an operation of the testing machine main body. The control unit 31 is connected to the load cell 24, the load mechanism 30, and the personal computer 33. The personal computer 33 is connected to an input unit 34 such as a keyboard and a display unit 35 such as a liquid crystal display device. The control unit 31 and the personal computer 33 constitute a control device of the present invention.

Software for executing test control and analyzing test results is installed in the personal computer 33, and various functions are realized by executing each of programs of the software. The personal computer 33 includes a memory 36 in which programs necessary for device control and data analysis are stored and data and the like is temporarily stored during control, a communication unit 37 which transmits and receives data to/from the control unit 31 and the displacement gauge 40 according to a predetermined communication protocol, an operation device 38 such as a CPU for executing a program, and a storage device 39 which stores images and test data input from the first camera 41 and the second camera 42 of the displacement gauge 40. The memory 36, the communication unit 37, the operation device 38, and the storage device 39 are connected to each other by a bus 49.

In FIG. 2, a displacement calculation unit 44 and an analysis unit 45 are shown as functional blocks related to displacement measurement stored in the memory 36 of the personal computer 33. The displacement calculation unit 44 calculates an amount of displacement of the test piece 11 by performing image processing on a photographed image of the first camera 41 and a photographed image of the second camera 42. The analysis unit 45 analyzes material characteristics based on the amount of displacement of the test piece 11 calculated by the displacement calculation unit 44.

The first camera 41 and the second camera 42 of the displacement gauge 40 will be described in more detail. The telecentric lens of the first camera 41 is a photographing lens in which a telecentric optical system designed so that light passing through an aperture by a plurality of lens elements travels parallel to an optical axis is held in a lens barrel, and has a characteristic in which an optical magnification does not change even when a photographing distance changes because an angle of view is 0 degrees. Therefore, the telecentric lens of the first camera 41 requires at least an effective diameter of the lens larger than a distance D1 between reference line marks 13 of the test piece 11 shown in FIG. 3 (for example, when the distance D1 is 50 mm, the effective diameter is 75 mm). The first camera 41 is disposed toward the vicinity of a center of the test piece 11 so that both the reference line marks 13 for observing a longitudinal displacement of the test piece 11 and reference line marks 14 for observing a transverse displacement are within a field of view.

The wide-angle lens of the second camera 42 is a photographing lens with a wide angle of view of which a photographic field of view range can be set to be wider than in a lens which is referred to as a standard lens and has an angle of view of 45 to 60 degrees. The second camera 42 equipped with a wide-angle lens as a photographing lens is disposed above the first camera 41 so that a range approximately 2 to 5 times wider in a longitudinal direction than the field of view of the first camera 41 is within the field of view thereof. When a tensile test is performed by the material testing machine shown in FIG. 1, since the crosshead 23 is moved upward, an elongation direction of the test piece 11 is mainly the upper side. Therefore, the second camera 42 is disposed above the first camera 41 so that the side above the test piece 11 can be more within the field of view thereof. However, for example, in a material testing machine in which an actuator is disposed under the table and a lower gripper is connected to a piston rod of the actuator and moved downward to perform a tensile test, the second camera 42 is disposed below the first camera 41. That is, a positional relationship between the first camera 41 and the second camera 42 is changed according to a direction in which a tensile force acts on the test piece 11.

When the tensile test is started by this material testing machine, as shown in FIG. 3, a pair of reference line marks 13 are provided in the longitudinal direction and a pair of reference line marks 14 are provided in a transverse direction on the surface of the plate-shaped test piece 11. Then, both ends of the test piece 11 are gripped by the upper gripper 21 and the lower gripper 22. At this time, the arrangement of the first camera 41 and the second camera 42 is adjusted so that, in a positional relationship between the test piece 11 and the displacement gauge 40, a surface of the test piece 11 and the photographing lenses of the first camera 41 and the second camera 42 in the displacement gauge 40 face each other, and the photographic field of view of the first camera 41 has a range shown by a broken line in FIG. 3, and the photographic field of view of the second camera 42 has a range shown by a two-point chain line in FIG. 3. The reference line marks 13 and the reference line marks 14 can be easily attached by attaching a reference line sticker printed with these marks to the surface of the test piece 11. A sticker in which a reference line is expressed as a binarized image, such as one printed with a black reference line mark on a white background and one printed with a white reference line mark on a black background, is used as the reference line sticker. Further, the reference line may be directly drawn on the test piece 11 in addition to the attachment by attaching the reference line sticker.

When the tensile test is started and the crosshead 23 is moved upward by driving the load mechanism 30, a tensile force is applied to the test piece 11. From the images acquired by the first camera 41 and the second camera 42, the distance D1 between the reference line marks 13 and the distance D2 between the reference line marks 14 are observed over time, and an amount of elongation displacement (an amount of change in the distance D1) and an amount of width displacement (an amount of change in the distance D2) of the test piece 11 are calculated by an action of the displacement calculation unit 44. Then, due to an action of the analysis unit 45, the stress is calculated from a force and a cross-sectional area of the test piece 11 input from the load cell 24, a longitudinal strain is calculated from the amount of elongation displacement and the original distance D1, a transverse strain is calculated from the amount of width displacement and the original distance D2, and a stress-strain diagram is created.

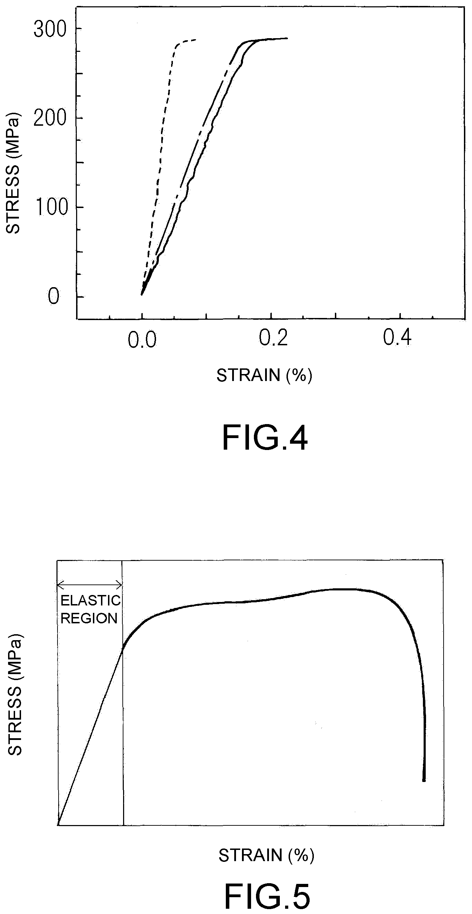

Next, the test results when the tensile test is performed by the material testing machine having such a configuration will be described. FIGS. 4 and 5 are stress-strain diagrams obtained by performing a tensile test on the test piece 11. A vertical axis of the graph is stress, and a horizontal axis is strain. FIG. 4 is a stress-strain diagram drawn based on the displacement calculated from the image acquired by the first camera 41, shows a relationship between the stress and the longitudinal strain by a solid line, and shows a relationship between the stress and the transverse strain by a broken line. Further, in FIG. 4, a relationship between the stress and the longitudinal strain when the elongation of the test piece 11 is measured by a strain gauge type contact displacement gauge is shown by an alternate long and short dash line. FIG. 5 is a stress-strain diagram showing a relationship between the stress and the longitudinal strain from the start of the test to the breakage of the test piece 11, and is a synthetic stress-strain diagram obtained by synthesizing a stress-strain diagram drawn based on the displacement calculated from the image acquired by the first camera 41, and a stress-strain diagram drawn based on the displacement calculated from the image acquired by the second camera 42. In this drawing, the stress-strain diagram based on the image acquired from the first camera 41 is shown by a thin line, and the stress-strain diagram based on the image acquired from the second camera 42 is shown by a thick line.

The test piece 11 is a plate-shaped test piece of stainless steel (SUS304), and when a tensile force is applied to such a material, the stress linearly increases up to an elastic limit. In the image of the first camera 41 having the telecentric lens, it is possible to grasp a minute displacement generated in the test piece 11 immediately after the start of the test, and as shown in FIG. 4, it is possible to draw a stress-strain diagram in which the stress linearly increases in a low-strain region showing elastic deformation immediately after the start of the test. When a displacement is measured with the conventional non-contact displacement gauge shown in FIG. 9, the test piece may move in a direction of an optical axis of the camera at an initial stage of the start of the test, and thus there is a problem that both the longitudinal strain and the transverse strain show inflection points in a data region which is an elastic region of the drawn stress-strain diagram, but this problem is solved in the present invention. In the present invention, since the elongation is measured from the image of the first camera 41 having the telecentric lens at the initial stage of the start of the test, the first camera 41 can accurately measure the elongation without being affected by the movement of the test piece in the direction of the optical axis.

When comparing the elastic modulus calculated based on the relationship between the stress and the longitudinal strain when the elongation of the test piece 11 is measured with the strain gauge type contact displacement gauge shown as a reference in FIG. 4 with the elastic modulus calculated based on the relationship between the stress and the longitudinal strain when the elongation is measured based on the image acquired from the first camera 41, a difference therebetween was within an acceptable range of measurement error. Then, as for the Poisson's ratio, a value close to a nominal value (0.3) of this type of stainless steel could be obtained. Therefore, it can be evaluated that the displacement measurement results by the displacement gauge 40 sufficiently satisfies the accuracy required for measurement of a small displacement.

When the elongation is performed until the reference line mark 13 (refer to FIG. 3) on the upper side of the test piece 11 goes out of the photographic field of view of the first camera 41 having the telecentric lens, the distance D1 between the reference line marks 13 cannot be observed from the photographed image of the first camera 41. On the other hand, the second camera 42 having the wide-angle lens can keep the upper and lower reference line marks 13 in the photographic field of view until the test piece 11 breaks in a wide field of view, and the observation of the distance D1 between the reference line marks 13 can be performed from the start of the test to the end of the test. However, the second camera 42 has a displacement resolution lower than that of the first camera 41 and does not satisfy the accuracy required for the measurement of the small displacement. Therefore, in the displacement gauge 40, for a certain period of time immediately after the start of the test in which the small displacement is mainly measured, the longitudinal strain is calculated using displacement data calculated based on the image acquired from the first camera 41, and for the time thereafter, the longitudinal strain is calculated using displacement data calculated based on the image acquired from the second camera 42 in which the large displacement is mainly measured. Then, such data are synthesized to create a stress-strain diagram shown in FIG. 5.

In this embodiment, the photography by the first camera 41 and the photography by the second camera 42 are set to be performed from the start of the test to the end of the test. This is because, when the elongation is performed until the reference line mark 13 on the upper side of the test piece 11 goes out of the photographic field of view of the first camera 41, the observation of the distance D1 between the reference line marks 13 from the photographed image of the first camera 41 cannot be performed, but the observation of the distance D2 between the reference line marks 14 may be performed. Since the image data is stored in the storage device 39, a user can select and analyze the data for the required time from the data after the test is completed.

Further, in this embodiment, in the analysis of the test data in the analysis unit 45, the stress-longitudinal strain diagram (a first stress-strain diagram) drawn based on the displacement calculated from the image acquired by the first camera 41, and the stress-longitudinal strain diagram (a second stress-strain diagram) drawn based on the displacement calculated from the image acquired by the second camera 42 are created separately. Then, the synthetic stress-strain diagram is created using the data of the first stress-strain diagram from the start of the test until the amount of displacement of the test piece 11 reaches a predetermined amount of displacement and using the data of the second stress-strain diagram when the amount of displacement of the test piece 11 exceeds a predetermined amount of displacement. Therefore, as shown in FIG. 5, the synthetic stress-strain diagram in which the data of the elastic region based on the small displacement measurement through the first camera 41 and the data based on the large displacement measurement through the second camera 42 are synthesized is created. A connection point of these data may be a point at which Hooke's law is established (a proportional limit), a yield point, or an arbitrary point selected by the user. That is, it is sufficient to create a stress-strain diagram using the displacement data based on the image acquired from the first camera 41 in a region used for calculation of the elastic modulus which requires highly accurate data of the minute displacement. Data connection is performed smoothly using a method such as a least-squares method as necessary.

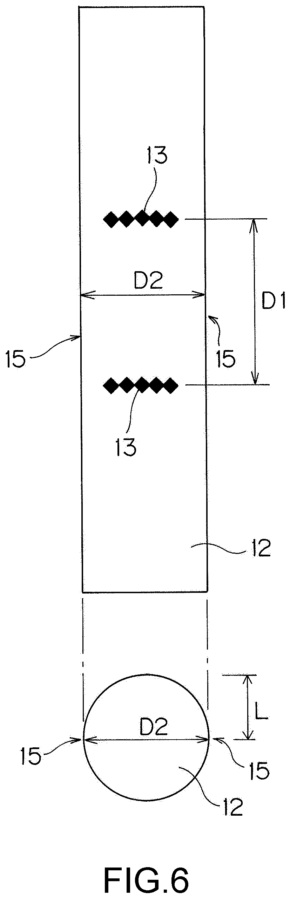

FIG. 6 is a schematic view of a round bar-shaped test piece 12.

In the case of the round bar-shaped test piece 12, unlike the plate-shaped test piece 11, it is difficult to attach the reference line marks 14 for width measurement, and thus the width displacement is performed by measuring a distance between edges 15 of the test piece 12. When the round bar-shaped test piece 12 is photographed with a camera using a conventional standard lens, there is a difference L between a distance from the camera to the reference line mark 13 and a distance from the camera to a position of the edge 15 of the test piece 12, and due to such a difference in focal position, it is difficult to recognize both of them on the image with a sharpness which can satisfy the measurement accuracy. On the other hand, the telecentric lens does not change an optical magnification even when a distance between the camera and a subject changes. Thus, in the displacement gauge 40 which measures the small displacement with the first camera 41 with the telecentric lens, even when there is the difference L shown in FIG. 6, it is possible to recognize the reference line mark 13 and the edge 15 of the test piece 12 on the two-dimensional image with a sharpness which satisfies the measurement accuracy.

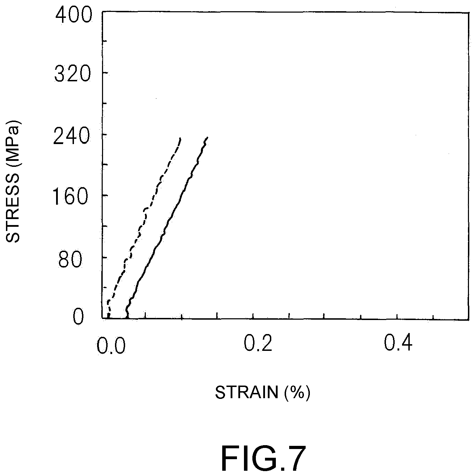

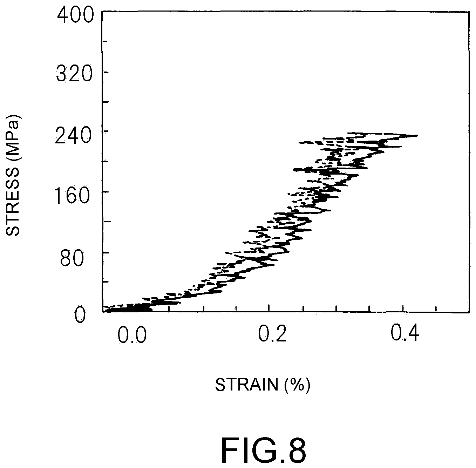

FIG. 7 is a stress-longitudinal strain diagram obtained by performing a tensile test on the test piece 12, and FIG. 8 is a stress-transverse strain diagram thereof. In FIGS. 7 and 8, results of a tensile test performed on a round bar-shaped test piece 12 having the same size and made of a metal (S45C) classified into carbon steel under the same test conditions are shown by broken lines and solid lines.

In the stress-longitudinal strain diagram shown in FIG. 7, the strain changes linearly with respect to the stress in a low strain region showing the elastic deformation. The elastic modulus obtained from a slope of this straight line is 210 GPa, and the Poisson's ratio which is a ratio of the longitudinal strain to the transverse strain in FIGS. 7 and 8 is 0.33. It can be evaluated that values of the elastic modulus and the Poisson's ratio are comparable to physical property values of this type of carbon steel obtained from the results of the tensile test measured by, for example, a contact displacement gauge.

In the above-described embodiment, although the case in which the tensile test is performed has been described as an example, even when a compression test in which a compression force is applied to the test piece is performed by replacing the upper gripper 21 and the lower gripper 22 with pressure plates and moving the crosshead 23 downward, particularly, it is possible to accurately measure the small displacement in the width direction. Even for specimens with shapes such as spherical specimens in which it is difficult to recognize edges thereof with the non-contact displacement gauge with the conventional standard lens, it is possible to calculate the width displacement during the compression test with high accuracy from the image taken by the first camera 41 having the telecentric lens.

Further, for example, the present invention can be applied to a high-speed tensile testing machine in which a tensile force can be applied to a test piece at a test speed of 20 m/s. In the high-speed tensile testing machine, it is difficult to attach the contact displacement gauge to the test piece to perform the test, and also in the non-contact displacement gauge with the conventional standard lens, there is a problem that the measurement accuracy of the small displacement and the measurement of the large displacement until a breakage cannot be achieved at the same time. However, such a problem can be solved by adopting the above-described displacement gauge 40 in the high-speed tensile tester and performing high-speed video photography with the first camera 41 and the second camera 42.

### [Reference Signs List]

11 Test piece
12 Test piece
13 Reference line mark
14 Reference line mark
15 Edge
18 Table
19 Cover
21 Upper gripper
22 Lower gripper
23 Crosshead
24 Load cell
30 Load mechanism
31 Control unit
33 Personal computer
34 Input unit
35 Display unit
36 Memory
37 transmission unit
38 Operation device
39 Storage device
40 Displacement gauge
41 First camera
42 Second camera
43 Light
44 Displacement calculation unit
45 Analysis unit
49 Bus

## Claims

1. A material testing machine, comprising:
a non-contact displacement gauge which measures an amount of displacement of a test body to which a force is applied;
a force detector which measures the force applied to the test body; and
a control device which is connected to the force detector and the non-contact displacement gauge,
wherein the non-contact displacement gauge comprises,
a first camera which has a telecentric lens and photographs the test body, and
a second camera which has a wide-angle lens and photographs the test body with a field of view wider than a photographic field of view of the first camera, and
the control device comprises,
a displacement calculation unit which calculates the amount of displacement of the test body by performing image processing on an image photographed by the first camera and an image photographed by the second camera, and
an analysis unit which analyzes material characteristics based on the amount of displacement of the test body calculated by the displacement calculation unit.

2. The material testing machine according to claim 1, wherein the analysis unit creates a first stress-strain diagram based on the amount of displacement of the test body calculated by image-processing the image photographed by the first camera and the force measured by the force detector, creates a second stress-strain diagram based on the amount of displacement of the test body calculated by image-processing the image photographed by the second camera and the force measured by the force detector, and creates a synthetic stress-strain diagram obtained by synthesizing the first stress-strain diagram and the second stress-strain diagram.

3. The material testing machine according to claim 2, wherein the analysis unit creates the synthetic stress-strain diagram using data of the first stress-strain diagram in a portion until the amount of displacement of the test body reaches a predetermined amount of displacement after start of a test and using data of the second stress-strain diagram in a portion in which the amount of displacement of the test body exceeds the predetermined amount of displacement.
